(19) Europäisches Patentamt
European Patent Office
Office européen des brevets

(11) **EP 4 024 199 A1**

(12) **DEMANDE DE BREVET EUROPEEN**

(43) Date de publication:
**06.07.2022 Bulletin 2022/27**

(21) Numéro de dépôt: **21217517.8**

(22) Date de dépôt: **23.12.2021**

(51) Classification Internationale des Brevets (IPC):
**G06F 7/483** (2006.01)

(52) Classification Coopérative des Brevets (CPC):
**G06F 7/5443; G06F 7/483**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **29.12.2020 FR 2014208**

(71) Demandeur: **Kalray**
**38330 Montbonnot Saint Martin (FR)**

(72) Inventeur: **DUPONT DE DINECHIN, Benoît**
**38000 Grenoble (FR)**

(74) Mandataire: **de Jong, Jean Jacques et al**
**Omnipat**
**24, place des Martyrs de la Résistance**
**13100 Aix en Provence (FR)**

(54) **PROCESSEUR COMPRENANT UN OPÉRATEUR DE DOUBLE MULTIPLICATION ET DOUBLE ADDITION ACTIVABLE PAR UNE INSTRUCTION À TROIS RÉFÉRENCES D OPÉRANDES**

(57)    L'invention concerne un procédé de traitement de données par un processeur, le procédé comprenant des étapes consistant à : recevoir par le processeur, une instruction comprenant un code d'operateur associé à trois références de registres contenant des opérandes de multiplication (a1, b1, a2, b2), un opérande d'addition (c) et un résultat (rs) d'opérateur, le code d'opérateur désignant un opérateur (OP) configuré pour calculer des produits de paires d'opérandes de multiplication et additionner les produits avec l'opérande d'addition, décoder l'instruction par un décodeur d'instructions du processeur, pour déterminer l'opérateur à exécuter et les registres contenant les opérandes à fournir à l'opérateur et le résultat de l'opérateur, exécuter l'opérateur par un circuit de calcul arithmétique du processeur, appliqué aux opérandes dans les registres désignés par les références de registres, et charger le résultat (rs) de l'opérateur dans le registre désigné pour recevoir le résultat.

[Fig. 3]

Fig. 3

**Description**

La présente invention concerne l'exploitation d'opérateurs matériels de traitement de nombres d'un cœur de processeur, et en particulier des opérateurs combinant plusieurs nombres par des opérations de multiplication et d'addition. Les nombres manipulés peuvent être encodés sous différentes formats tels qu'en virgule fixe ou flottante, simple ou double précision, les nombres entiers et les représentations d'éléments de corps de Galois. Les opérations combinées peuvent comprendre par exemple des opérations d'évaluation de polynômes, des opérations d'arithmétique complexe, et des opérations de multiplication de matrices ou de vecteurs.

De nombreuses applications font intervenir des sommes de produits de nombres. C'est le cas par exemple des multiplications de matrices ou des fonctions transcendantales comme les fonctions trigonométriques et les fonctions logarithmiques, qui sont approximées par des polynômes. Les technologies d'intelligence artificielle, notamment l'apprentissage profond font appel à des multiplications de matrices pouvant avoir plusieurs centaines de lignes et de colonnes et au calcul de combinaisons linéaires.

Dans les principaux cœurs de processeurs généralistes, les sommes de produits de nombres sont effectuées en s'appuyant sur un opérateur matériel qui réalise une multiplication et une addition fusionnées ou FMA (Fused multiply and Add). Plus précisément, cet opérateur réalise l'opération a·b + c à trois opérandes a, b, c qui peuvent être en virgule flottante, en commençant par calculer le produit des opérandes a et b, puis en additionnant le produit à l'opérande c. Le résultat de l'addition est arrondi en un nombre susceptible d'être représenté dans un format en virgule flottante. Ce nombre peut être stocké dans un registre notamment en vue d'utiliser le résultat comme opérande d'addition d'une nouvelle opération FMA.

Généralement, les instructions d'un jeu d'instructions d'un cœur de processeur n'acceptent pas plus de trois opérandes explicites, sous la forme d'identifiants de registres du cœur de processeur, à savoir deux identifiants de registres source contenant les valeurs des opérandes, et un identifiant de registre de destination prévu pour recevoir le résultat de l'opération.

Pour des raisons de performance, il est souhaitable de réaliser un cœur de processeur possédant un opérateur matériel combinant plusieurs multiplications et additions, et d'ajouter au jeu d'instructions du cœur de processeur une instruction permettant d'activer cet opérateur matériel.

Il est donc souhaitable de prévoir un jeu d'instructions de cœur de processeur comprenant une instruction pouvant combiner plus de trois opérandes, sans utiliser plus de trois identifiants de registres, pour pouvoir notamment évaluer un polynôme, une multiplication de nombres complexes ou une multiplication de matrices à l'aide d'un nombre minimum d'instructions.

Des modes de réalisation concernent un procédé de traitement de données par un processeur, le procédé comprenant des étapes consistant à : recevoir par le processeur, une instruction comprenant un code d'operateur associé à trois références de registres désignant des registres contenant des paires d'opérandes de multiplication, un opérande d'addition et un registre désigné pour recevoir un résultat d'opérateur, le code d'opérateur désignant un opérateur configuré pour calculer des produits des paires d'opérandes de multiplication et additionner les produits avec l'opérande d'addition, décoder l'instruction par un décodeur d'instructions du processeur, pour déterminer l'opérateur à exécuter et les registres contenant les opérandes à fournir à l'opérateur et le résultat de l'opérateur, exécuter l'opérateur par un circuit de calcul arithmétique du processeur, appliqué aux opérandes dans les registres désignés par les références de registres, et charger le résultat de l'opérateur dans le registre désigné pour recevoir le résultat.

Selon un mode de réalisation, les références de registres comprennent deux références de registres désignant respectivement : deux paires de registres consécutifs d'un banc de registres, contenant les opérandes de multiplication, ou bien deux groupes de N registres consécutifs du banc de registres, contenant les opérandes de multiplication, l'opérateur calculant N produits à partir de N paires de registres associant un registre d'un des deux groupes avec un registre respectif de l'autre des deux groupes.

Selon un mode de réalisation, les références de registres comprennent : une référence de registre désignant un registre contenant l'opérande d'addition et pour recevoir le résultat fourni par l'opérateur, ou bien une référence de registre désignant deux registres consécutifs du banc de registres, contenant l'opérande d'addition et pour recevoir le résultat fourni par l'opérateur, respectivement, ou bien une référence de registre désignant un registre contenant l'opérande d'addition, et une référence de registre désignant un registre pour recevoir le résultat fourni par l'opérateur.

Selon un mode de réalisation, les produits sont calculés simultanément et les additions sont effectuées simultanément.

Selon un mode de réalisation, les références de registres désignent plusieurs ensembles d'opérandes, et chaque registre désigné comprend un opérande de chaque ensemble d'opérandes, l'opérateur étant simultanément exécuté sur chaque ensemble d'opérandes, le registre désigné pour recevoir le résultat contenant les résultats de l'opérateur appliqué aux ensembles d'opérandes.

Selon un mode de réalisation, le procédé comprend des étapes consistant à : recevoir par le processeur, une série d'instructions pour évaluer un polynôme, des instructions de la série d'instructions désignant l'opérateur et cinq opérandes, chaque instruction désignant l'opérateur étant configurée pour évaluer deux termes appliqués à une variable, d'un polynôme du second degré, résultant d'une décomposition du polynôme à évaluer, et calculer la somme des deux termes avec un troisième terme du polynôme du second degré, le registre désigné pour recevoir le résultat d'une instruction désignant l'opérateur de la série d'instructions étant désigné dans une instruction suivante désignant l'opérateur de la série d'instructions comme registre d'opérande de produit à multiplier par la variable élevée au carré, et exécuter successivement par le processeur, les instructions de la série d'instructions pour calculer une valeur du polynôme à évaluer appliqué à la variable.

Selon un mode de réalisation, le polynôme à évaluer est préalablement décomposé en deux polynômes rassemblant les termes contenant la variable élevée à une puissance paire et respectivement, les termes contenant la variable élevée à une puissance impaire, la série d'instructions comprenant deux séries d'instructions pour évaluer les deux polynômes respectivement.

Selon un mode de réalisation, le procédé comprend des étapes consistant à : recevoir par le processeur, une série d'instructions pour évaluer un produit de deux vecteurs, la série d'instructions comprenant des instructions désignant l'opérateur configurées pour calculer chacune deux termes du produit et les additionner à un résultat obtenu par l'exécution d'une instruction précédente de la série d'instructions, désignant l'opérateur, et exécuter successivement par le processeur, les instructions de la série d'instructions.

Selon un mode de réalisation, l'instruction comprend un paramètre indiquant sélectivement si le signe de chacun des produits doit être inversé avant de calculer la somme.

Selon un mode de réalisation, l'instruction comprend un paramètre indiquant si les registres désignés par l'une des références de registres désignant des opérandes de multiplication, doivent être intervertis par paires avant le calcul des produits.

Selon un mode de réalisation, le procédé comprend des étapes consistant à : recevoir par le processeur, une série d'instructions pour évaluer le produit de deux nombres complexes, la série d'instructions comprenant deux instructions désignant l'opérateur et les paires de registres contenant les parties réelles et imaginaires des deux nombres complexes, respectivement, l'une des deux instructions désignant l'opérateur étant configurée pour calculer une partie réelle du produit et l'autre des deux instructions désignant l'opérateur étant configurée pour calculer une partie imaginaire du produit, et exécuter par le processeur, les instructions de la série d'instructions.

Selon un mode de réalisation, les opérandes sont encodés dans l'un des formats suivants : en virgule flottante en simple ou double précision, en virgule fixe, nombre entier, et nombre appartenant à un corps de Galois.

Selon un mode de réalisation, le circuit de calcul arithmétique du processeur est configuré pour calculer les produits et la somme sans perte de précision due à des opérations d'arrondi.

Des modes de réalisation peuvent également concerner un processeur configuré pour mettre en œuvre le procédé précédemment défini.

Selon un mode de réalisation, le circuit comprend plusieurs unités de calcul pour exécuter en parallèle plusieurs opérateurs calculant les produits et additionnant les produits avec l'opérande d'addition.

Selon un mode de réalisation, le circuit comprend un opérateur comportant plusieurs multiplieurs calculant chacun un produit de paires d'opérandes, et un additionneur additionnant ensemble les produits à un opérande d'addition

Des exemples de réalisation de l'invention seront décrits dans ce qui suit, à titre non limitatif en relation avec les figures jointes parmi lesquelles :

[Fig.1] la figure 1 est un schéma de principe d'un opérateur à double multiplication et double addition ;
[Fig.2] la figure 2 illustre un exemple d'architecture d'un cœur de processeur pouvant servir de base à l'invention ;
[Fig.3] la figure 3 est un schéma de principe d'un exemple de réalisation d'un opérateur fusionné à double multiplication et double addition.

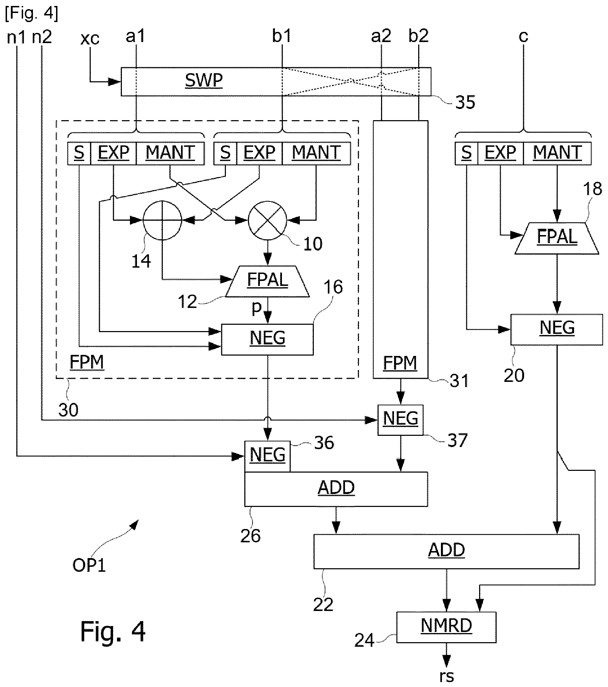

[Fig.4] la figure 4 est un schéma de principe d'un autre exemple de réalisation d'un opérateur fusionné à double multiplication et double addition.

Des modes de réalisations proposent un cœur de processeur comportant dans son jeu d'instructions une instruction permettant d'activer un opérateur FDMDA combinant deux multiplications et deux additions pour réaliser l'opération $a1 \cdot b1 + a2 \cdot b2 + c$. Cet opérateur réalise l'équivalent de deux opérations FMA. Selon un mode de réalisation, l'opérateur FDMDA est combiné à trois références de registres pour spécifier les cinq opérandes de l'opérateur et désigner le registre destiné à recevoir le résultat de l'opération.

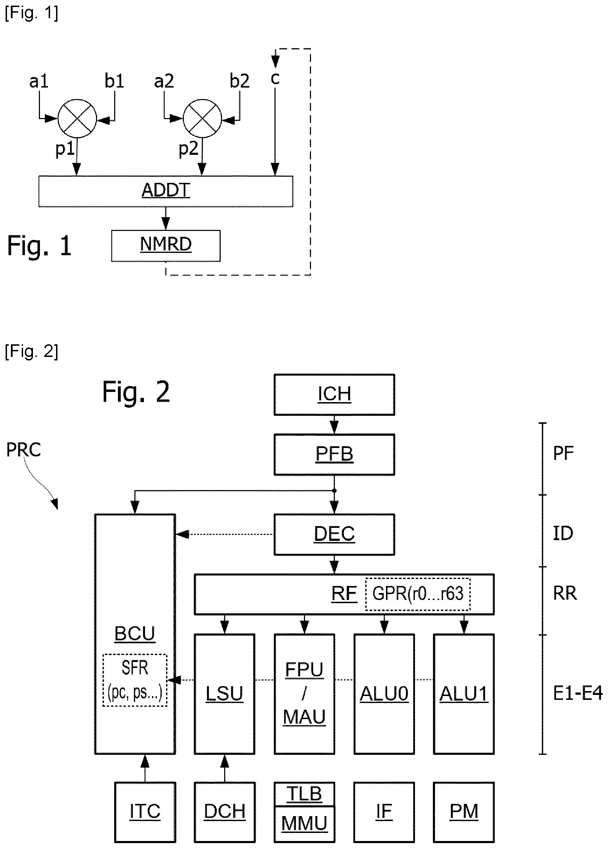

La figure 1 représente un opérateur de multiplication et d'addition fusionnées FDMDA. L'opérateur est associé à deux paires d'opérandes de multiplication, ou multiplicandes (a1, b1) et (a2, b2), et un opérande d'addition c. Les paires de multiplicandes (a1, b1) et (a2, b2) sont fournies à des multiplieurs respectifs. Les deux produits résultants p1, p2, appelés "produits partiels", et l'opérande d'addition c sont additionnés simultanément par un arbre d'addition ADDT. Les multiplicandes et l'opérateur d'addition peuvent être dans un format à virgule flottante, de précisions identiques ou différentes, ou encore dans des formats différents comme à virgule fixe ou entier. Le résultat de l'addition est traité par un circuit de normalisation et d'arrondi NMRD pour être converti dans le format à virgule flottante de départ, de sorte à être réutilisable comme opérande d'addition c.

Selon un mode de réalisation, une référence de registre de l'opérateur FDMDA désigne un registre contenant la valeur de l'opérande c et à utiliser pour fournir le résultat de l'opération.

Selon un autre mode de réalisation, les deux paires d'opérandes (a1, b1) et (a2, b2) sont désignées par deux références de registres désignant chacune deux registres consécutifs d'un banc de registres.

Selon un exemple de réalisation, le jeu d'instructions du cœur de processeur comprend une instruction FFDMDAW désignant l'opérateur FDMDA et associée à des références de registre comme suit :

$$\text{FFDMDAW } \$r_x = \$r_y r_{y+1}, \$r_z r_{z+1}, \text{ ou bien}$$
$$\text{FFDMDAW } \$r_x = \$r_y, \$r_z.$$

Dans cette représentation, "$\$r_x$" désigne un registre $r_x$ contenant l'opérande c et destiné à recevoir le résultat de l'opération, et "$\$r_y r_{y+1}$, $\$r_z r_{z+1}$" ou "$\$r_y$, $\$r_z$" désigne deux paires de registres consécutifs $(r_y, r_{y+1})$ et $(r_z, r_{z+1})$ dans un banc de registres. Ainsi, chacune des paires désignées de registres consécutifs comprend deux opérandes. Cette instruction réalise l'opération : $r_x = r_x + r_y \cdot r_z + r_{y+1} \cdot r_{z+1}$.

Selon un mode de réalisation, l'opérateur FFDMDAW peut être appliqué à des nombres en virgule flottante au format en simple ou double précision, à des nombres en virgule fixe, à des nombres entiers, ou encore à une représentation de nombres appartenant à un corps de Galois.

Selon un mode de réalisation, pour évaluer un polynôme Pn de degré n généralement formulé sous la forme :

$$P_n(x) = \sum_{i=0}^{n} a_i x^i \qquad\qquad (1)$$

le polynôme $P_n$ est décomposé en polynômes de degré 2 imbriqués, sous la forme suivante :

$$P_n(x) = x^2 Q_{n-2}(x) + a_1 x + a_0, \text{ si n est pair, et} \qquad (2)$$

$$P_n(x) = x Q_{n-1}(x) + a_0, \text{ si n est impair,} \qquad (3)$$

avec $Q_j(x) = x^2 Q_{j-2}(x) + a_{n-j+1}x + a_{n-j}$, et j = 2, 4, 6, ..., n-2 si n est pair (ou 2, 4, 6, ..., n-1 si n est impair). Par exemple, un polynôme de degré 6 (n=6) peut être présenté sous la forme suivante :

$$P_6(x) = ((a_6 x^2 + a_5 x + a_4)x^2 + a_3 x + a_2)x^2 + a_1 x + a_0$$

Un polynôme de degré 7 (n=7) peut être présenté sous la forme suivante :

$$P_7(x) = (((a_7 x^2 + a_6 x + a_5)x^2 + a_4 x + a_3)x^2 + a_2 x + a_1)x + a_0$$

L'évaluation du polynôme $P_6(x)$ peut être réalisée par exemple par la séquence d'instructions suivante :

```
LW $r8 = x              # charger x dans le registre r8
FMULW $r9 = $r8, $r8    # calculer x² dans le registre r9
LW $r7 = a₆             # charger a₆ dans le registre r7
LW $r6 = a₅             # charger a₅ dans le registre r6
LW $r5 = a₄             # charger a₄ dans le registre r5
LW $r4 = a₃             # charger a₃ dans le registre r4
LW $r3 = a₂             # charger a₂ dans le registre r3
LW $r2 = a₁             # charger a₁ dans le registre r2
LW $r1 = a₀             # charger a₀ dans le registre r1
FFDMDAW $r5 = $r6r7,$r8r9   # calculer r5 = Q₂(x) = a₆x² + a₅x + a₄
```

(suite)

```
FFDMDAW $r3 = $r4r5,$r8r9    # calculer r3 = Q₄(x) = x²Q₂(x) a₃x + a₂
FFDMDAW $r1 = $r2r3,$r8r9    # calculer r1 = P₆(x) = x²Q₄(x) a₁x + a₀
```

Le texte figurant après le caractère "#" étant un commentaire explicatif de l'instruction précédente.

Il peut être observé que le polynôme $P_6(x)$ peut être évalué par seulement trois instructions FFDMDAW successives, et sans avoir à effectuer des transferts de résultat intermédiaire dans un autre registre. D'une manière générale, un polynôme de degré n peut être évalué à l'aide de n/2 instructions FFDMDAW si n est pair, et (n+1)/2 instructions FFDMDAW si n est impair.

Selon un autre mode de réalisation, le polynôme $P_n$ est décomposé en deux polynômes, P2k et $P_{2k+1}$ ou $P_{2k-1}$, tels que $P_n(x) = P2k(x) + x \cdot P_{2k-1}(x)$ si n est pair (n = 2k), et $P_n(x) = x \cdot P_{2k+1}(x^2) + P_{2k}(x^2)$ si n est impair (n = 2k+1). En posant $X = x^2$, les polynômes $P_{2k}$ et $P_{2k+1}$ sont de la forme suivante :

$$P_{2k}(X) = \sum_{i=0}^{2k} a_{2i}X^i \quad \text{et} \quad P_{2k+1}(X) = \sum_{i=0}^{2k} a_{2i+1}X^i. \qquad (4)$$

On a donc affaire à deux polynômes indépendants auxquels la décomposition définie par les équations (2) et (3) peut être appliquée d'une manière indépendante. Si le cœur de processeur le permet, notamment dans le cas d'un cœur de processeur de type SIMD ("Simple Instruction, Multiple Data"), les deux polynômes $P_{2k}(X)$ et $P_{2k-1}(X)$ (ou $P_{2k+1}(X)$) peuvent être évalués en parallèle.

L'instruction FFDMDAW peut également être utilisée pour calculer un produit matriciel ou un produit de vecteurs comportant une ou plusieurs opérations du type :

$$V_1V_2 = \sum_{i=0}^{n} a_i \cdot b_i \qquad (5)$$

où $V_1$ est un vecteur de composantes $(a_0, a_1, a_2, ..., a_n)$ et $V_2$ est un vecteur de composantes $(b_0, b_1, b_2, ..., b_n)$. Selon un mode de réalisation, le produit des vecteurs V1, V2 peut être effectué par la séquence d'instructions suivante :

```
LW $r1 = 0                   # initialiser le registre r1
LW $r2 = a₀                  # charger a₀ dans le registre r2
LW $r3 = a₁                  # charger a₁ dans le registre r3
LW $r8 = b₀                  # charger b₀ dans le registre r8
LW $r9 = b₁                  # charger b₁ dans le registre r9
FFDMDAW $r1 = $r2r3,$r8r9    # calculer r1 = r1 + a₀·b₀ + a₁·b₁
LW $r2 = a₂                  # charger a₂ dans le registre r2
LW $r3 = a₃                  # charger a₃ dans le registre r3
LW $r8 = b₂                  # charger b₂ dans le registre r8
LW $r9 = b₃                  # charger b₃ dans le registre r9
FFDMDAW $r1 = $r2r3,$r8r9    # calculer r1 = r1 + a₂·b₂ + a₃·b₃
```

Ainsi chaque instruction FFDMDAW ci-dessus calcule deux produits successifs $a_i \cdot b_i$ et $a_{i+1} \cdot b_{i+1}$ et les additionne avec le résultat précédent mémorisé dans le registre r1.

Selon un mode de réalisation, l'instruction FFDMDAW peut être associée à un paramètre supplémentaire, par exemple défini par un suffixe pouvant prendre les valeurs suivantes : ".NP", ".PN" et ".NN" et spécifiant si le signe du premier produit (r2·r4) ou du second produit (r3·r5) doit être inversé dans le calcul $r1 = r1 + r2 \cdot r4 + r3 \cdot r5$ réalisé par l'opérateur FFDMDAW. Ainsi :

```
FFDMDAW.NP $r1 =$r2r3,$r4r5 réalise l'opération r1 = r1 - r2·r4 + r3·r5,
FFDMDAW.PN $r1=$r2r3,$r4r5 réalise l'opération r1 = r1 + r2·r4 - r3·r5, et
FFDMDAW.NN $r1=$r2r3,$r4r5 réalise l'opération r1 = r1 - r2·r4 - r3·r5.
```

Selon un mode de réalisation, l'instruction FFDMDAW peut être associée à un paramètre supplémentaire, défini par exemple par un suffixe ".X" permettant de spécifier que les deux valeurs dans la seconde paire de registres doivent être échangées avant d'exécuter le calcul. Ainsi, FFDMDAW.X \$r1=\$r2r3,\$r4r5 réalise l'opération r1 = r1 + r2·r5 + r3 r4.

La combinaison des paramètres d'inversion de signe et d'échange peut être utile par exemple pour calculer le produit de nombres complexes $z_1$ = a + b·i et $z_2$ = c + d·i (avec $i^2$ = -1). Ainsi, le produit $z_1 \cdot z_2$ = a·c - b·d + i(a·d + b·c) peut être obtenu par les instructions suivantes :

```
LW $r0 = 0                    # initialiser le registre r0 à 0
LW $r1 = 0                    # initialiser le registre r1 à 0
LW $r2 = a                    # charger a dans le registre r2
LW $r3 = b                    # charger b dans le registre r3
LW $r4 = c                    # charger c dans le registre r4
LW $r5 = d                    # charger d dans le registre r5
FFDMDAW.PN $r0=$r2r3,$r4r5    # r0 = r2·r4 - r3·r5 = a·c - b·d
FFDMDAW.X $r1=$r2r3,$r4r5     # r1 = r2·r5 + r3·r4 = a·d + b·c,
```

les registres r0, r1 recevant respectivement la partie réelle (a·c - b·d) et la partie imaginaire (a·d + b·c) du produit des nombres complexes $z_1$, $z_2$.

De même, il est possible de calculer le produit d'un nombre complexe par le conjugué d'un autre nombre complexe :

$$z_1 \cdot \bar{z}_2 = (a + i \cdot b)(c - i \cdot d) = (a \cdot c + b \cdot d) + i(b \cdot c - a \cdot d) \tag{6}$$

Le produit $z_1 \cdot \bar{z}_2$ peut être obtenu par les deux instructions suivantes :

```
FFDMDAW $r0=$r2r3,$r4r5       # r0 = r2·r4 + r3·r5 = a·c + b·d, et
FFDMDAW.NP.X $r1=$r2r3,$r4r5  # r1 = -r2·r5 + r3·r4 = -a·d + b·c.
```

Il peut être observé que ces instructions permettent de spécifier individuellement les registres recevant les parties réelle et imaginaire du produit. Si le cœur de processeur le permet, notamment dans le cas d'un cœur de processeur disposant d'instructions de type SIMD, il est donc possible de calculer le produit de vecteurs de nombres complexes en une seule opération ou en parallèle, les parties réelles et imaginaires du produit pouvant être obtenus dans des vecteurs respectifs désignés dans l'instruction.

Il convient également d'observer que les paires de multiplicandes (a1, b1), (a2, b2) peuvent être désignées dans l'instruction FFDMDAW de différentes autres manières. Par exemple, l'instruction FFDMDAW \$r1=\$r2r3,\$r4r5 peut désigner l'opération r1 = r2·r3 + r4·r5 + r1. Dans ce cas, le paramètre ".X" permet d'échanger les registres r3 et r5.

Selon un mode de réalisation, l'instruction FFDMDAW comprend une quatrième référence de registre pour désigner deux registres distincts contenant respectivement l'opérande d'addition c et le résultat de l'opération. Ainsi, par exemple, une instruction désignant l'opérateur FDMDA peut être formulée de la manière suivante :

```
FFDMDAW $r0=$r2r3,$r4r5,$r1       # r0 = r2·r4 + r3·r5 + r1
```

Selon un autre mode de réalisation, les références de registre FFDMDAW désignant les multiplicandes de l'instruction désignent chacune un groupe de N registres consécutifs d'un banc de registres du cœur de processeur. Pour des raisons matérielles, N peut être limité à une puissance de 2 (N = $2^n$, avec n = 1, 2, 3, ...). Ainsi, par exemple, une instruction désignant un opérateur FNMNA avec N = 4 peut être formulée de la manière suivante :

```
FFNMNAW $r1=$r4r5r6r7,$r8r9r10r11
# r1 = r1 + r4·r8 + r5·r9 + r6r·10 + r7·r11, ou bien
FFNMNAW $r1=$r4,$r8
# r1 = r1 + r4·r8 + r5·r9 + r6·r10 + r7·r11.
```

Les équations (2) et (3) peuvent être généralisées et adaptées aux cas où l'instruction FFNMNAW peut effectuer quatre ou davantage de multiplications et additionner tous les produits obtenus avec l'opérande d'addition. Ainsi, le polynôme à évaluer peut être décomposé en polynômes de degré 4 ou davantage en fonction du nombre de paires de multiplicandes spécifiées dans l'instruction FFNMNAW. Dans ce cas, le paramètre ".X" peut être utilisé dans l'instruction FFNMNAW pour spécifier que les registres de chaque paire de registres dans l'un des deux groupes désignés de N registres doivent être intervertis. En outre, l'instruction peut être associée à un paramètre ".N" / ".P" pour chacun des registres d'un des deux groupes désignés de N registres.

Plus généralement, l'instruction FFDMDAW (ou FFNMNAW) peut être étendue à une instruction de type SIMD pour travailler simultanément sur des ensembles d'opérandes comprenant Q éléments chacun, pour évaluer simultanément Q opérations FDMDA (ou FFNMNAW). Par exemple, dans l'instruction FFDMDAWQ $r0=$r2r3,$r4r5, les registres ri, i = 1, 2, ... 5, comprennent chacun Q = 4 opérandes ri[j], j = 1, 2, 3, 4, et l'instruction est exécutée en effectuant les quatre opérations :

r0[j] = r2[j]·r4[j] + r3[j]·r5[j], avec j = 1, 2, 3, 4. Ainsi, les registres désignés dans l'instruction FFDMDAWQ sont quatre fois plus grands que les registres désignés dans l'instruction FFDMDAW.

La figure 2 illustre un exemple de cœur de processeur PRC pouvant disposer de l'instruction FFDMDAW dans son jeu d'instructions. Le cœur de processeur dispose d'un pipeline ayant une profondeur de 7 étages, comprenant un étage de préchargement d'instructions PF ("Pre-Fetch"), un étage de décodage d'instruction ID, un étage de lecture de registres RR, et quatre étages d'exécution d'instruction E1 à E4.

L'étage PF comprend essentiellement une mémoire tampon PFB stockant les instructions préchargées, alimentée à partir d'un cache d'instructions ICH. L'étage ID comprend une unité de décodage d'instructions DEC qui commande un banc de registres RF ("Register File") formant l'étage RR. L'unité de décodage est configurée notamment pour décoder les instructions de type FFDMDAW. Le banc de registres RF gère des registres d'usage générique GPR ("General Purpose Registers"), dans cet exemple 64 registres r0 à r63 de 64 bits. Les registres sélectionnés sont reliés en lecture ou écriture, selon l'instruction décodée, à l'une de plusieurs unités de traitement parallèles formant les étages d'exécution E1 à E4. Ces unités de traitement peuvent inclure une unité de lecture/écriture mémoire LSU ("Load/Store Unit") accédant à un cache de données DCH, une unité de traitement à virgule flottante FPU ("Floating-Point Unit"), une unité de branchement et de comparaison BCU connectée et configurée pour traiter les instructions qui lui sont dédiées dès l'entrée du décodeur DEC, une ou plusieurs unités arithmétiques et logiques ALU0, ALU1, et une unité de multiplication MAU pouvant comprendre un ou plusieurs opérateurs de type FNMNA (N = $2^n$). L'unité MAU peut être fusionnée avec l'unité FPU.

Le cœur de processeur présente une architecture de type VLIW ("Very Large Instruction Word"). En conséquence, l'unité de décodage DEC traite des paquets pouvant contenir plusieurs instructions à exécuter simultanément - le cœur peut ici exécuter jusqu'à cinq instructions simultanément, une sur chaque unité de traitement des étages d'exécution E1-E4, et une dans une unité BCU décrite ci-dessous.

L'unité BCU est conçue pour prendre en charge la gestion des branchements et inclut un jeu de registres de fonctions système SFR, comprenant notamment un compteur de programme PC, configuré pour contenir l'adresse de l'instruction en cours d'exécution (ou l'adresse de la première instruction d'un paquet VLIW), et un registre d'état du cœur de processeur PS, qui définit notamment un anneau de privilège dans lequel s'exécute l'instruction courante, les permissions associées, et les exceptions masquées. Des emplacements SPC et SPS sont également prévus pour la sauvegarde du compteur de programme et du registre d'état du cœur de processeur.

Le cœur de processeur comprend également diverses unités périphériques, notamment un contrôleur d'interruptions ITC qui génère des interruptions vers l'unité BCU en fonction d'événements externes, une unité de gestion de mémoire MMU associée à une table de traductions d'adresses TLB, des interfaces d'entrée/sortie IF, des moniteurs de performance PM, des mémoires cache DCH, etc.

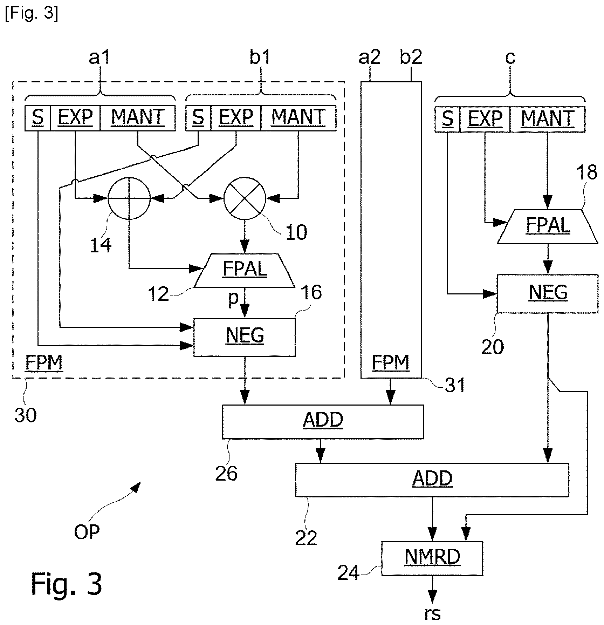

La figure 3 représente un exemple d'opérateur OP de type FDMDA à précision mixte (fp16 / fp32). Certains éléments requis classiquement pour traiter des spécificités des nombres à virgule flottante standardisés, comme les nombres sous-normaux, les nombres non définis (NaN), l'infini, et autres, ne sont pas décrits.

L'opérateur OP comprend plusieurs unités de multiplication de nombres à virgule flottante FPM 30, 31 fournissant chacune un résultat en virgule fixe. Chaque unité FPM reçoit une paire de multiplicandes (a1, b1), (a2, b2), par exemple au format fp16 (ou binary16) ou fp31 (ou binary 32). Chacun des multiplicandes comprend un bit de signe S, un exposant EXP, et une mantisse MANT. Les deux mantisses sont fournies à un multiplieur 10 qui calcule un produit des mantisses MANT sous la forme d'un nombre entier. Le produit des mantisses est fourni à un circuit d'alignement 12 qui est commandé par un additionneur 14 produisant la somme des exposants EXP des multiplicandes a1 et b1 (ou a2 et b2). Le circuit d'alignement 12 est configuré pour effectuer une conversion du produit des mantisses en tenant compte de la somme des exposants, afin de fournir le produit p des multiplicandes a1, b1 (ou a2, b2) sous la forme d'un nombre à virgule fixe.

La sortie du circuit d'alignement 12 est transmise à un circuit de négation 16 configuré pour inverser le signe de la valeur absolue lorsque les signes des multiplicandes sont opposés. Le nombre ainsi produit par le circuit de négation 16 forme la sortie d'une des unités de multiplication 30, 31. Chaque produit partiel a1·b1, a2·b2 est ainsi calculé par une unité multiplication 30, 31 respective. Les produits partiels sont fournis à un additionneur 26.

Par ailleurs, un opérande d'addition c fourni à l'opérateur OP, par exemple en format fp32 (ou binary32) comprend un bit de signe S, un exposant EXP, et une mantisse MANT. La mantisse MANT est fournie à un circuit d'alignement 18 qui est commandé par l'exposant de l'opérande c. Le circuit 18 est configuré pour effectuer une conversion de l'opérande c à virgule flottante en un nombre à virgule fixe.

Le nombre fourni par le circuit d'alignement 18 est passé par un circuit de négation 20 commandé par le bit de signe de l'opérande c. Alternativement, il est possible d'omettre le circuit de négation 20 et, au niveau du circuit de négation 16, d'inverser le signe du produit s'il n'est pas égal à celui de l'opérande c.

Le nombre à virgule fixe ainsi fourni par l'additionneur 26 est à additionner avec l'opérande d'addition c, converti en virgule fixe. Ainsi, le circuit d'alignement 18 opère une conversion vers un nombre à virgule fixe, et le traitement en aval est adapté en conséquence. En particulier, les bits de poids fort de l'opérande c sont fournis à un additionneur 22. Du côté de la somme de produits partiels, les 80 + o bits fournis par l'additionneur 26 sont complétés à gauche et à droite par 24 bits de valeur fixe (0 pour un résultat positif ou 1 pour un résultat négatif).

L'additionneur 22 reçoit la sortie l'additionneur 26 et les bits de poids fort du nombre signé fourni par le circuit de négation 20. Les bits de poids faible de la sortie du circuit de négation 20 sont utilisés en aval dans un calcul de l'arrondi.

La sortie de l'additionneur 22 est traitée par un circuit de normalisation et d'arrondi 24 qui a pour fonction de convertir le résultat à virgule fixe de l'addition en un nombre à virgule flottante rs au format fp32. Les unités de multiplication 30, 31 et les additionneurs 22, 26 peuvent être dimensionnés de manière à effectuer des calculs sans perte ou arrondi L'arrondi réalisé par le circuit 24 peut être également calculé de manière correcte.

Ainsi, la structure d'opérateur OP de la f igure 3 ne réalise qu'un seul arrondi, au moment de la conversion du résultat de l'addition finale en nombre rs à virgule flottante, et ce seul arrondi peut être calculé de manière correcte en toutes circonstances.

Bien entendu, le nombre d'unités de multiplication FPM peut être étendu au-delà de deux pour exécuter des instructions FFNMNAW à plus de deux paires de multiplicandes. En effet, il peut être observé que les unités de multiplication FPM sont indépendantes les unes des autres, car il n'est pas nécessaire de comparer les exposants des produits partiels pour opérer un alignement relatif des mantisses des produits partiels. Chaque unité FPM opère une conversion vers le même format à virgule fixe, commun à tous les nombres. Il en résulte qu'il est particulièrement aisé au niveau de la conception de faire varier le nombre d'unités de multiplication FPM selon les besoins, car il n'y a pas d'interdépendances entre les unités de multiplication. L'adaptation de la structure du multi-additionneur 26 en fonction du nombre d'opérandes est aisée également, car elle est faite selon des règles systématiques. La complexité de l'opérateur peut ainsi être maintenue proportionnelle au nombre d'unités de multiplication.

Selon un mode de réalisation illustré par la f igure 4, l'opérateur FDMDA OP1 comprend en outre un circuit d'inversion 35 recevant les opérandes b1, b2, pour échanger ces opérandes en fonction d'un signal de commande xc. Ainsi, dans un état du signal xc, l'opérande b1 est fourni à l'unité de multiplication 31 au lieu de l'unité 30 et l'opérande b2 est fourni à l'unité de multiplication 30 au lieu de l'unité 31. L'état du signal xc peut être contrôlé par le décodeur d'instruction DEC en fonction de la présence ou non du paramètre ".X" dans l'instruction FFDMDAW.

L'opérateur OP1 comprend en outre deux circuits de négation 36, 37 commandés respectivement par deux signaux n1, n2 pour inverser le signe, respectivement du produit en sortie de l'unité de multiplication 30 et du produit en sortie de l'unité de multiplication 31, avant d'être additionnés entre eux dans l'additionneur 26. L'état des signaux n1, n2 est défini en fonction de la présence de l'un ou l'autre des paramètres ".NP", ".PN", ".NN", associé à l'instruction FFDMDAW.

Il apparaîtra clairement à l'homme de l'art que la présente invention est susceptible de diverses variantes de réalisation et diverses applications. En particulier, les opérateurs illustrés aux f igures 3 et 4 ont été décrits sous forme de circuits à logique combinatoire. Dans un cœur de processeur cadencé à une fréquence relativement rapide, le temps de réaction d'un circuit logique combinatoire peut être trop lent. Dans ce cas les opérateurs peuvent avoir une structure en pipeline, en prévoyant, des registres pour stocker des résultats intermédiaires, par exemple, pour stocker les nombres en sortie des circuits d'alignement 12 et 18 et/ou des circuits 30, 31 et 20. Les opérateurs décrits en référence aux f igures 3 et 4 peuvent aisément être adaptés à d'autres formats de précision qu'ils soient standardisés ou non-standardisés.

**Revendications**

**1.** Procédé de traitement de données par un processeur (PRC), le procédé comprenant des étapes consistant à :

   recevoir par le processeur, une instruction comprenant un code d'operateur associé à trois références de registres désignant des registres contenant des paires d'opérandes de multiplication (a1, b1, a2, b2), un opérande d'addition (c) et un registre désigné pour recevoir un résultat (rs) d'opérateur, le code d'opérateur désignant un opérateur (OP, OP1) configuré pour calculer des produits (p) des paires d'opérandes de multiplication et additionner les produits avec l'opérande d'addition,

décoder l'instruction par un décodeur d'instructions (DEC) du processeur, pour déterminer l'opérateur à exécuter et les registres (r0-r63) contenant les opérandes à fournir à l'opérateur et le résultat (rs) de l'opérateur,

exécuter l'opérateur (OP, OP1) par un circuit de calcul arithmétique (MAU) du processeur, appliqué aux opérandes dans les registres désignés par les références de registres, et

charger le résultat (rs) de l'opérateur dans le registre désigné pour recevoir le résultat.

2. Procédé selon la revendication 1, dans lequel les références de registres comprennent deux références de registres désignant respectivement :

deux paires de registres consécutifs d'un banc de registres (GPR), contenant les opérandes de multiplication (a1, b1, a2, b2), ou bien

deux groupes de N registres consécutifs du banc de registres, contenant les opérandes de multiplication, l'opérateur (OP, OP1) calculant N produits à partir de N paires de registres associant un registre d'un des deux groupes avec un registre respectif de l'autre des deux groupes.

3. Procédé selon la revendication 1 ou 2, dans lequel les références de registres comprennent :

une référence de registre désignant un registre contenant l'opérande d'addition (c) et pour recevoir le résultat (rs) fourni par l'opérateur (OP, OP1), ou bien

une référence de registre désignant deux registres consécutifs du banc de registres (GPR), contenant l'opérande d'addition (c) et pour recevoir le résultat (rs) fourni par l'opérateur, respectivement, ou bien

une référence de registre désignant un registre contenant l'opérande d'addition, et une référence de registre désignant un registre pour recevoir le résultat fourni par l'opérateur.

4. Procédé selon l'une des revendications 1 à 3, dans lequel les produits sont calculés simultanément et les additions sont effectuées simultanément.

5. Procédé selon l'une des revendications 1 à 4, dans lequel les références de registres désignent plusieurs ensembles d'opérandes, et chaque registre désigné comprend un opérande de chaque ensemble d'opérandes, l'opérateur étant simultanément exécuté sur chaque ensemble d'opérandes, le registre désigné pour recevoir le résultat (rs) contenant les résultats de l'opérateur appliqué aux ensembles d'opérandes.

6. Procédé selon l'une des revendications 1 à 5, comprenant des étapes consistant à :

recevoir par le processeur (PRC), une série d'instructions pour évaluer un polynôme, des instructions de la série d'instructions désignant l'opérateur (OP, OP1) et cinq opérandes, chaque instruction désignant l'opérateur étant configurée pour évaluer deux termes appliqués à une variable, d'un polynôme du second degré, résultant d'une décomposition du polynôme à évaluer, et calculer la somme des deux termes avec un troisième terme du polynôme du second degré, le registre désigné pour recevoir le résultat (rs) d'une instruction désignant l'opérateur de la série d'instructions étant désigné dans une instruction suivante désignant l'opérateur de la série d'instructions comme registre d'opérande de produit à multiplier par la variable élevée au carré, et

exécuter successivement par le processeur, les instructions de la série d'instructions pour calculer une valeur du polynôme à évaluer appliqué à la variable.

7. Procédé selon la revendication 6, dans lequel le polynôme à évaluer est préalablement décomposé en deux polynômes rassemblant les termes contenant la variable élevée à une puissance paire et respectivement, les termes contenant la variable élevée à une puissance impaire, la série d'instructions comprenant deux séries d'instructions pour évaluer les deux polynômes respectivement.

8. Procédé selon l'une des revendications 1 à 7, comprenant des étapes consistant à :

recevoir par le processeur (PRC), une série d'instructions pour évaluer un produit de deux vecteurs, la série d'instructions comprenant des instructions désignant l'opérateur (OP, OP1) configurées pour calculer chacune deux termes du produit et les additionner à un résultat (rs) obtenu par l'exécution d'une instruction précédente de la série d'instructions, désignant l'opérateur, et

exécuter successivement par le processeur, les instructions de la série d'instructions.

9. Procédé selon l'une des revendications 1 à 8, dans lequel l'instruction comprend un paramètre (n1, n2) indiquant sélectivement si le signe de chacun des produits doit être inversé avant de calculer la somme.

10. Procédé selon l'une des revendications 1 à 9, dans lequel l'instruction comprend un paramètre (xc) indiquant si les registres désignés par l'une des références de registres désignant des opérandes de multiplication, doivent être intervertis par paires avant le calcul des produits.

11. Procédé selon l'une des revendications 1 à 10, comprenant des étapes consistant à :

recevoir par le processeur (PRC), une série d'instructions pour évaluer le produit de deux nombres complexes, la série d'instructions comprenant deux instructions désignant l'opérateur (OP, OP1) et les paires de registres contenant les parties réelles et imaginaires des deux nombres complexes, respectivement, l'une des deux instructions désignant l'opérateur étant configurée pour calculer une partie réelle du produit et l'autre des deux instructions désignant l'opérateur étant configurée pour calculer une partie imaginaire du produit, et exécuter par le processeur, les instructions de la série d'instructions.

12. Procédé selon l'une des revendications 1 à 11, dans lequel les opérandes sont encodés dans l'un des formats suivants :

en virgule flottante en simple ou double précision,
en virgule fixe,
nombre entier, et
nombre appartenant à un corps de Galois.

13. Procédé selon l'une des revendications 1 à 12, dans lequel le circuit de calcul arithmétique (FPU/MAU) du processeur (PRC) est configuré pour calculer les produits et la somme sans perte de précision due à des opérations d'arrondi.

14. Processeur configuré pour mettre en œuvre le procédé selon l'une des revendications 1 à 13.

15. Processeur selon la revendication 14, comprenant plusieurs unités de calcul pour exécuter en parallèle plusieurs opérateurs (OP, OP1) calculant les produits et additionnant les produits avec l'opérande d'addition.

16. Processeur selon la revendication 14 ou 15, comprenant un opérateur (OP, OP1) comportant plusieurs multiplieurs (FPM) calculant chacun un produit de paires d'opérandes, et un additionneur (26, 22) additionnant ensemble les produits à un opérande d'addition

[Fig. 1]

a1    b1    a2    b2    c

p1          p2

ADDT

Fig. 1        NMRD

[Fig. 2]

Fig. 2                    ICH

PRC                      PFB                    PF

BCU          DEC                    ID

RF  GPR(r0...r63)    RR

SFR
(pc, ps...)    LSU    FPU
/
MAU    ALU0    ALU1    E1-E4

ITC    DCH    TLB
MMU    IF    PM

[Fig. 3]

Fig. 3

[Fig. 4]

Fig. 4

EP 4 024 199 A1

Europäisches Patentamt
European Patent Office
Office européen des brevets

# RAPPORT DE RECHERCHE EUROPEENNE

Numéro de la demande

EP 21 21 7517

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/321938 A1 (BOSWELL BRENT RALPH [US] ET AL) 8 novembre 2018 (2018-11-08) * alinéa [0024] – alinéa [0035] * * alinéa [0054] – alinéa [0057] * * alinéa [0088] – alinéa [0121] * ----- | 1-16 | INV. G06F7/483 |
| A | US 2011/153707 A1 (GINZBURG BORIS [IL] ET AL) 23 juin 2011 (2011-06-23) * alinéa [0019] – alinéa [0043] * ----- | 1-16 | |
| X | US 2019/042260 A1 (OULD-AHMED-VALL ELMOUSTAPHA [US] ET AL) 7 février 2019 (2019-02-07) * alinéa [0081] – alinéa [0101] * ----- | 1-16 | |
| A | US 2008/256162 A1 (HENRY G GLENN [US] ET AL) 16 octobre 2008 (2008-10-16) * alinéa [0004] – alinéa [0012] * * alinéa [0004] – alinéa [0011] * ----- | 1-16 | DOMAINES TECHNIQUES RECHERCHES (IPC) G06F |

Le présent rapport a été établi pour toutes les revendications

| Lieu de la recherche | Date d'achèvement de la recherche | Examinateur |
|---|---|---|
| Munich | 12 mai 2022 | Chabot, Pedro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................................
& : membre de la même famille, document correspondant

EPO FORM 1503 03.82 (P04C02)

14

## ANNEXE AU RAPPORT DE RECHERCHE EUROPEENNE
## RELATIF A LA DEMANDE DE BREVET EUROPEEN NO.

EP 21 21 7517

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-05-2022

| Document brevet cité au rapport de recherche | | Date de publication | Membre(s) de la famille de brevet(s) | | Date de publication |
|---|---|---|---|---|---|
| US 2018321938 | A1 | 08-11-2018 | CN 108874744 A | | 23-11-2018 |
| | | | US 2018321938 A1 | | 08-11-2018 |
| | | | US 2019324747 A1 | | 24-10-2019 |
| | | | US 2021303302 A1 | | 30-09-2021 |
| | | | US 2021311733 A1 | | 07-10-2021 |
| | | | US 2021311734 A1 | | 07-10-2021 |
| US 2011153707 | A1 | 23-06-2011 | AUCUN | | |
| US 2019042260 | A1 | 07-02-2019 | CN 110909883 A | | 24-03-2020 |
| | | | EP 3623941 A2 | | 18-03-2020 |
| | | | US 2019042260 A1 | | 07-02-2019 |
| US 2008256162 | A1 | 16-10-2008 | CN 101145099 A | | 19-03-2008 |
| | | | TW 200841235 A | | 16-10-2008 |
| | | | US 2008256162 A1 | | 16-10-2008 |

EPO FORM P0460

Pour tout renseignement concernant cette annexe : voir Journal Officiel de l'Office européen des brevets, No.12/82